# EUROPEAN PATENT APPLICATION

(11) **EP 4 120 765 A1**
(43) Date of publication of application: **18.01.2023**
(21) Application number: 21768229.3
(22) Date of filing: 25.02.2021
(51) Int. Cl.: H04W 72/04, H04L 27/26, H04B 7/026, H04W 28/06, H04W 84/12

(54) **TRANSMISSION DEVICE AND TRANSMISSION METHOD**

(30) Priority: 13.03.2020 JP 2020044482
(71) Applicant: Panasonic Intellectual Property Corporation of America, Torrance, CA 90504 (US)
(72) Inventor: KANAYA, Hiroyuki, Sendai-shi, Miyagi 981-3206 (JP); IWAI, Takashi, Sendai-shi Miyagi 981-3206 (JP); URABE, Yoshio, Osaka-shi, Osaka 540-6207 (JP); TAKATA, Tomofumi, Sendai-shi, Miyagi 981-3206 (JP); NAKANO, Takayuki, Sendai-shi, Miyagi 981-3206 (JP); MINOTANI, Jun, Sendai-shi, Miyagi 981-3206 (JP); HUANG, Lei, Singapore 469332 (SG)
(74) Representative: Grünecker Patent- und Rechtsanwälte PartG mbB
(86) International application number: PCT/JP2021/006961
(87) International publication number: WO 2021/182109

(57) **Abstract**

The present invention provides a transmission device and transmission method that are capable of improving reception quality during cooperative communication. A first transmission device according to the present invention comprises: a control circuit which, if the first transmission device and a second transmission device are carrying out transmission in cooperation, generates first control information that includes information common to at least a portion of second control information transmitted by the second transmission device in a second preamble; and a transmission circuit which transmits the first control information in a first preamble.

## Description

### Technical Field

The present disclosure relates to a transmission apparatus and a transmission method.

### Background Art

The technical specification of the Institute of Electrical and Electronics Engineers (IEEE) 802.11be (hereinafter, referred to as "11be") has been developed as the successor standard of 802.11ax (hereinafter, referred to as "11ax"), which is a standard of IEEE 802.11.

In 11be, it is considered applying coordinated communication in which a plurality of radio communication apparatuses on the data transmission side cooperatively transmit data to a radio communication apparatus on the reception side.

### Citation List

### Non Patent Literature

NPL 1 IEEE 802.11-20/0011r0, Considerations on Coordinated OFDMA, 2020-01-13
NPL 2 IEEE 802.11-19/0103r1, AP Coordination in EHT, 2019-03-11
NPL 3 IEEE 802.11-19/1262r8, Specification Framework for TGbe, 2020-02-11
NPL 4 IEEE P802.11ax/D4.0, February 2019
NPL 5 IEEE 802.11.11-19/1143r3 Efficient Operation for Multi-AP Coordination, 2019-07-15
NPL 6 IEEE 802.11-19/1961r1, Multi-AP Group Establishment, 2020-01-02
NPL 7 IEEE 802.11-19/1972r1, Operation of Virtual BSS for Multi-AP Coordination, 2019-11-05
NPL 8 IEEE 802.11-19/1788r1, Coordinated OFDMA Operation, 2020-01-14

### Summary of Invention

There is scope for further study, however, on improvement in reception quality in the coordinated communication.

One non-limiting and exemplary embodiment facilitates providing a transmission apparatus and a transmission method each capable of improving reception quality in coordinated communication.

A transmission apparatus according to an embodiment of the present disclosure is a first transmission apparatus and includes: control circuitry, which, in operation, generates first control information including shared information with at least part of second control information transmitted in a second preamble by a second transmission apparatus, when the first transmission apparatus and the second transmission apparatus perform coordinated transmission; and transmission circuitry, which, in operation, transmits the first control information in a first preamble.

It should be noted that general or specific embodiments may be implemented as a system, an apparatus, a method, an integrated circuit, a computer program, a storage medium, or any selective combination thereof.

According to an exemplary embodiment of the present disclosure, it is possible to improve reception quality in coordinated communication.

Additional benefits and advantages of the disclosed embodiments will become apparent from the specification and drawings. The benefits and/or advantages may be individually obtained by the various embodiments and features of the specification and drawings, which need not all be provided in order to obtain one or more of such benefits and/or advantages.

### Brief Description of Drawings

FIG. 1A illustrates exemplary relationships among APs and STAs using a coordinated orthogonal frequency division multiple access (C-OFDMA);
FIG. 1B illustrates exemplary signals transmitted and received among the APs and STAs illustrated in FIG. 1A;
FIG. 2A illustrates exemplary relationships among APs and STAs combining the C-OFDMA and coordinated spatial reuse (CSR);
FIG. 2B illustrates exemplary signals transmitted and received among the APs and STAs illustrated in FIG. 2A;
FIG. 3 illustrates an exemplary format of an EHT preamble;
FIG. 4 illustrates an exemplary configuration of HE-SIG-B of an HE preamble;
FIG. 5 is a table illustrating exemplary information configured to RU allocation illustrated in FIG. 4;
FIG. 6 is a table illustrating exemplary information configured to a spatial configuration subfield;
FIG. 7 illustrates exemplary transmission and reception of control packets in coordinated communication;
FIG. 8 is a block diagram illustrating an exemplary configuration of a part of a transmission apparatus;
FIG. 9 is a block diagram illustrating an exemplary configuration of a part of a reception apparatus;
FIG. 10 is a block diagram illustrating an exemplary configuration of an AP;
FIG. 11 is a block diagram illustrating an exemplary configuration of an STA;
FIG. 12A illustrates exemplary relationships among APs performing C-OFDMA transmission and STAs;
FIG. 12B illustrates exemplary signals transmitted by the APs illustrated in FIG. 12A;
FIG. 13 illustrates a first example of signals in the C-OFDMA transmission;
FIG. 14 illustrates a second example of signals in the C-OFDMA transmission;
FIG. 15 illustrates an exemplary format of the EHT preamble;
FIG. 16 is a block diagram illustrating an exemplary configuration of the AP;
FIG. 17 illustrates an exemplary operation of the C-OFDMA transmission including transmission and reception of control packets;
FIG. 18A illustrates exemplary relationships among APs and STAs when the C-OFDMA and CSR are combined;
FIG. 18B illustrates exemplary signals transmitted and received among the APs and STAs illustrated in FIG. 18A;
FIG. 19 illustrates a first example of an RU allocation table according to the present embodiment;
FIG. 20 illustrates a second example of the RU allocation table according to the present embodiment;
FIG. 21 illustrates a third example of the RU allocation table according to the present embodiment;
FIG. 22 illustrates a fourth example of the RU allocation table according to the present embodiment;
FIG. 23 illustrates a fifth example of the RU allocation table according to the present embodiment;
FIG. 24 illustrates exemplary resource allocation in the coordinated transmission; and
FIG. 25 illustrates exemplary coordination flags for the example in FIG. 24.

### Description of Embodiments

Hereinafter, embodiments of the present disclosure will be described in detail with reference to the accompanying drawings.

### (Exemplary Embodiment)

### [Coordination Scheme]

In 11be, it is considered applying Multi-AP coordination (hereinafter, referred to as "coordinated communication") in which a plurality of access points (also referred to as "base stations"; hereinafter "APs") cooperatively transmit and receive data to and from terminals (hereinafter, referred to as "stations (STAs)"), for example. Both the APs and STAs are radio communication apparatuses. A plurality of coordination schemes are discussed for the coordinated communication.

For example, a coordination scheme called a coordinated orthogonal frequency division multiple access (C-OFDMA) is discussed (e.g., NPL 1).

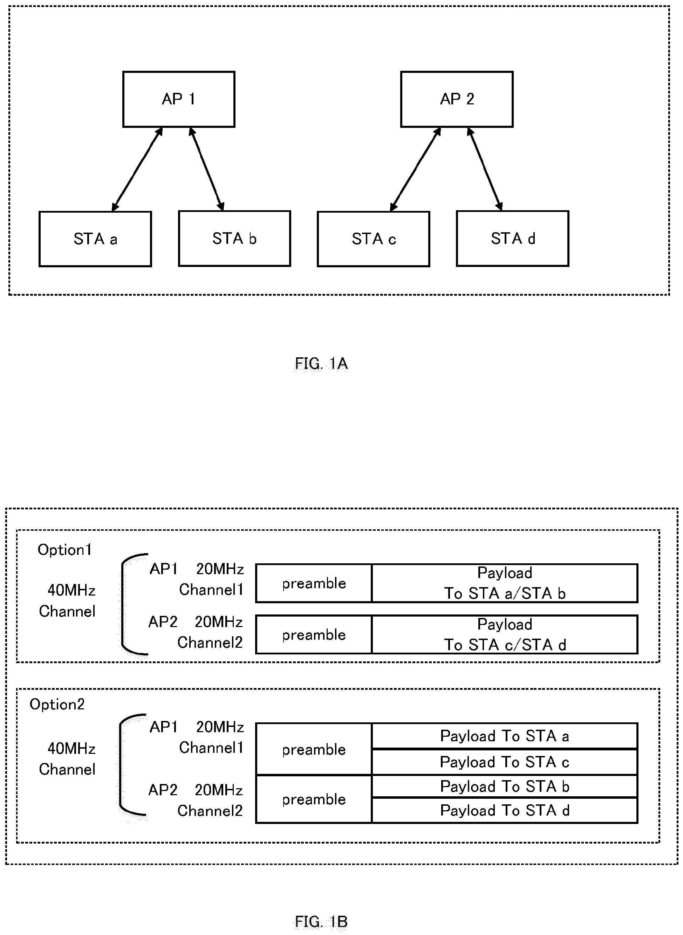

FIG. 1A illustrates exemplary relationships among APs and STAs using the C-OFDMA. FIG. 1B illustrates exemplary signals transmitted and received among the APs and STAs illustrated in FIG. 1A.

FIG. 1A illustrates two APs (AP 1 and AP 2) and four STAs (STA a, STAb, STA c, and STA d). In FIG. 1A, AP 1 transmits signals to STA a and STA b using the C-OFDMA, and AP 2 transmits signals to STA c and STA d using the C-OFDMA.

FIG. 1B illustrates exemplary signals transmitted by the APs illustrated in FIG. 1A using the C-OFDMA. FIG. 1B illustrates two examples, which are Option 1 and Option 2.

In Option 1, each of the APs transmits a signal in an individual frequency band for each AP using the C-OFDMA. For example, in Option 1, a 40 MHz frequency band is divided into (allocated for) a 20 MHz frequency band used by AP 1 and another 20 MHz frequency band used by AP 2. AP 1 transmits a signal including a preamble and payloads addressed to STA a and STA b in the 20 MHz frequency band used by AP 1 using the C-OFDMA. AP 2 transmits a signal including a preamble and payloads addressed to STA c and STA d in the 20 MHz frequency band used by AP 2 using the C-OFDMA.

In Option 2, each of the APs transmits a signal in a certain single frequency band using the C-OFDMA. For example, in Option 2, AP 1 transmits a signal including a preamble, a payload addressed to STA a, and a payload addressed to STA b in the 40 MHz frequency band using the C-OFDMA. AP 2 transmits a signal including a preamble, a payload addressed to STA c, and a payload addressed to STA d in the 40 MHz frequency band using the C-OFDMA.

In addition, the coordinated communication combining the above-described C-OFDMA and coordinated spatial reuse (CSR) is discussed (e.g., NPL 2).

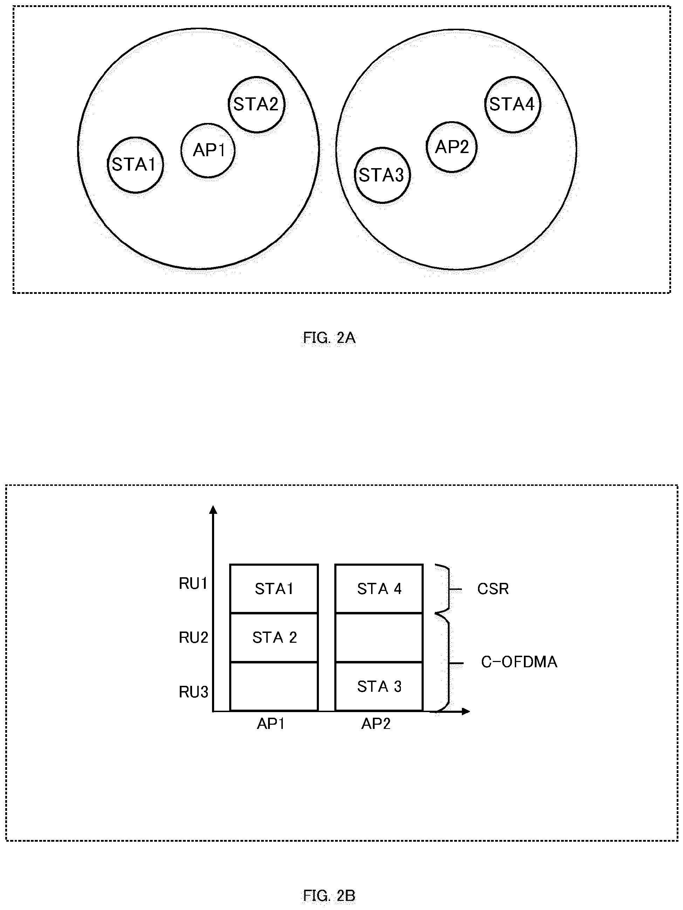

FIG. 2A illustrates exemplary relationships among APs and STAs combining the C-OFDMA and CSR. FIG. 2B illustrates exemplary signals transmitted and received among the APs and STAs illustrated in FIG. 2A

FIG. 2A illustrates two APs (AP 1 and AP 2) and four STAs (STA 1, STA 2, STA 3, and STA 4). In FIG. 2A, AP 1 transmits signals to STA 1 and STA 2, and AP 2 transmits signals to STA 3 and STA 4.

FIG. 2B illustrates exemplary signal transmission by AP 1 and AP 2 using three resource units (RUs) of RU 1, RU 2, and RU 3. Each RU is a unit of resources defined by time and frequency, for example. For example, AP 1 transmits a signal to STA 1 in RU 1, and AP 2 transmits a signal to STA 4 in RU 1. Here, AP 1 and AP 2 use the CSR in RU 1. In addition, AP 1 transmits a signal to STA 2 in RU 2, and AP 2 transmits a signal to STA 3 in RU 3. Here, AP 1 and AP 2 use the C-OFDMA in RU 2 and RU 3.

### [Exemplary Preamble Configuration]

A format of a preamble (hereinafter, referred to as an "EHT preamble") used in 11be has been discussed (e.g., NPL 3).

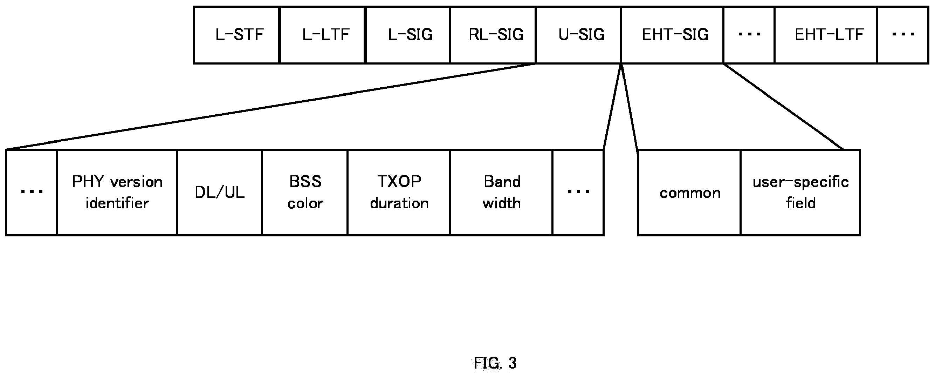

FIG. 3 illustrates an exemplary format of the EHT preamble. FIG. 3 illustrates fields included in the EHT preamble format. Each of the fields is configured with corresponding information (parameter or value).

The U-SIG includes a basic service set (BSS) color and a band width. The BSS color is information for identifying an AP to which a radio wave belongs, and for example, when a certain STA receives a BSS color different from a BSS color of the association AP, the STA can reduce a non-transmission period due to carrier sensing by setting a detection threshold higher in carrier sense multiple access/collision avoidance (CSMA/CA).

For the EHT-SIG, for example, a configuration similar to that of HE-SIG-B in a preamble of 11ax (e.g., HE Preamble) is considered.

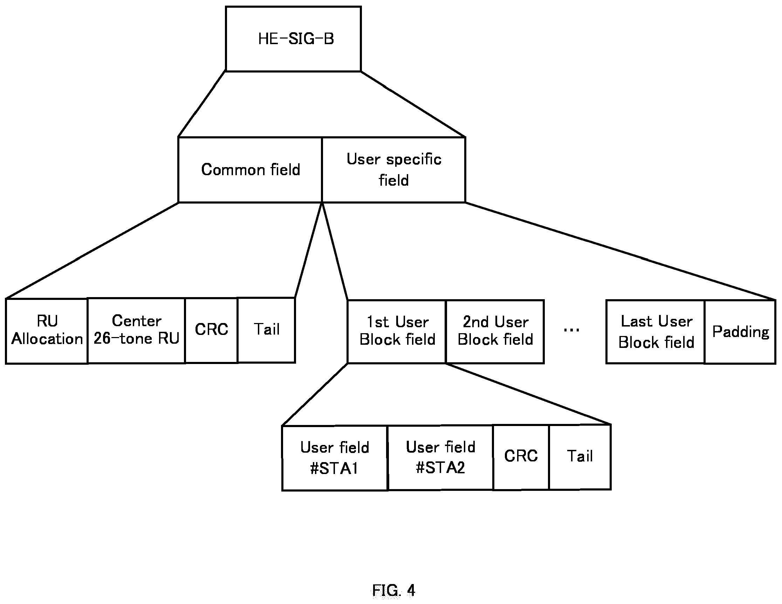

FIG. 4 illustrates an exemplary configuration of the HE-SIG-B of the HE preamble. The HE-SIG-B illustrated in FIG. 4 includes a common field and a user specific field.

The common field includes RU allocation. The RU allocation includes information on frequency allocation.

The user specific field includes information specific to each user (each STA). For example, the user specific field includes one or more user block fields from the 1st user block field to the last user block field. The 1st user block field includes a user field for STA 1 and a user field for STA 2. Although not illustrated in FIG. 4, each of the 2nd user block field to the last user block field includes one or more user fields. In addition, although not illustrated in FIG. 4, the user field includes a number assigned to each STA (hereinafter, referred to as "association identification (AID)"). The AID is exemplary identification information for identifying the STA. Further, although not illustrated in FIG. 4, the user field may include a spatial configuration subfield.

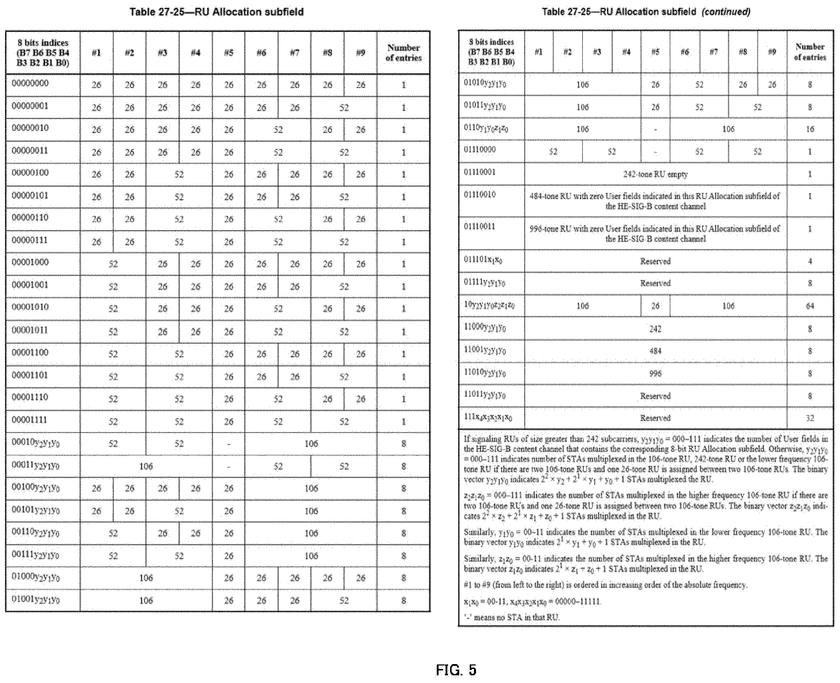

FIG. 5 is a table illustrating exemplary information configured to the RU allocation illustrated in FIG. 4. The RU allocation in the common field illustrated in FIG. 4 is configured with 8-bit indices illustrated in the table of FIG. 5 depending on the configured RU allocation.

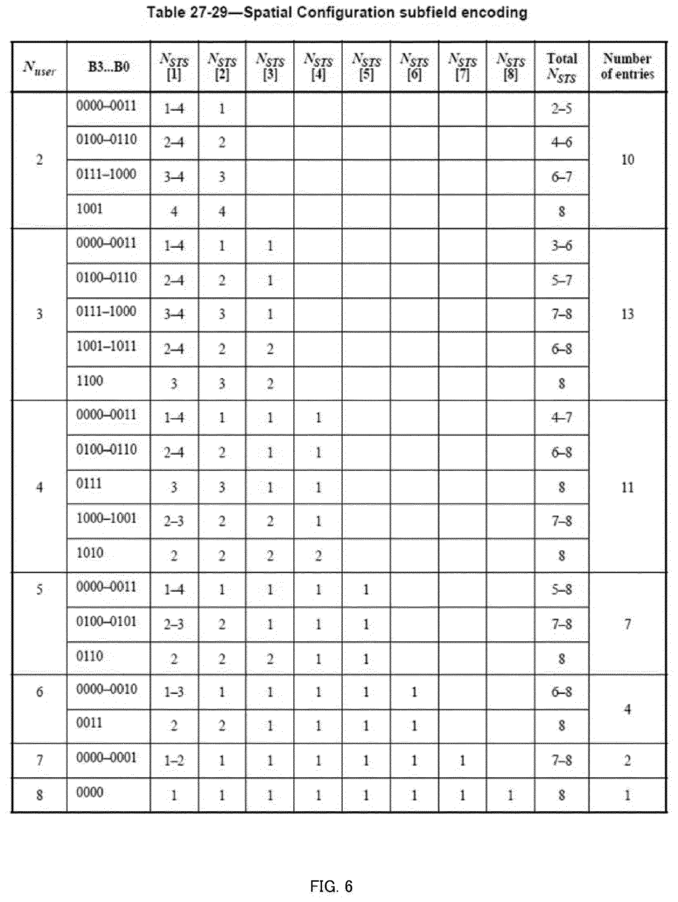

FIG. 6 is a table illustrating exemplary information configured to the spatial configuration subfield. The "Nuser" in the table of FIG. 6 indicates the number of destination STAs. In the table of FIG. 6, 4-bit information specifies allocation of the number of spatial streams corresponding to the number of destination STAs.

### [Exemplary packet transmission in Coordinated Communication]

In the coordinated communication, it is considered that a control packet is transmitted before a data packet is transmitted (e.g., NPL 5).

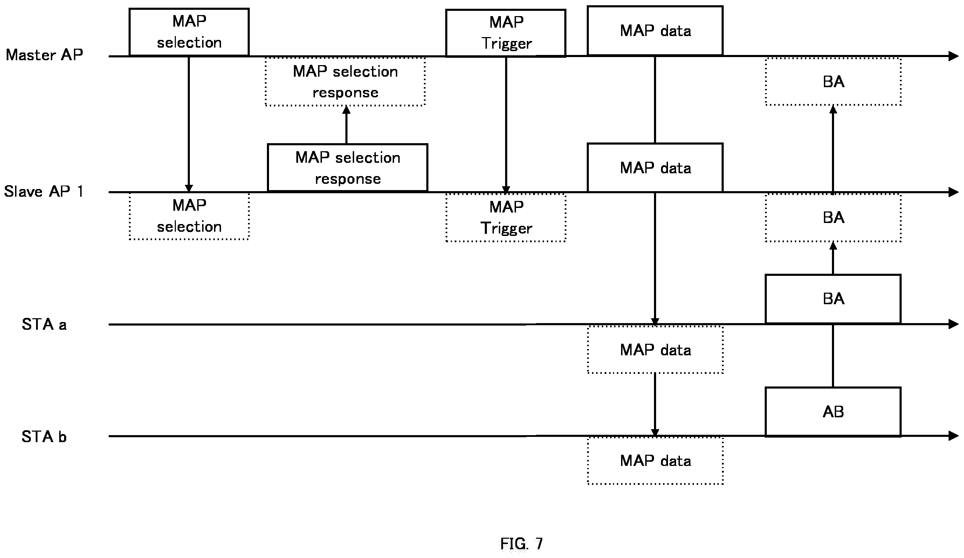

FIG. 7 illustrates exemplary transmission and reception of control packets in the coordinated communication. FIG. 7 illustrates exemplary packets transmitted and received between a master AP, a slave AP (slave AP 1), STA a, and STA b.

For example, the master AP transmits a packet called MAP selection to the slave AP before transmitting a data packet (MAP data). The slave AP receives the MAP selection and transmits a packet called a MAP selection response to the master AP. The master AP then transmits a MAP Trigger to the slave AP. The master AP and the slave AP transmit and receive these packets, and then transmit a data packet to the STAs.

### [Preamble in Coordinated Communication]

In the coordinated communication, when a plurality of radio communication apparatuses (e.g., APs or STAs) respectively transmit preambles at the same time in the same frequency, information (e.g., control information) included in the preambles may be different from each other depending on the preambles (e.g., depending on the radio communication apparatus from which the preamble is transmitted). In this case, a radio communication apparatus (e.g., AP or STA) receiving the preamble possibly makes a decoding error in decoding the received preamble.

The present disclosure facilitates providing a transmission apparatus and a transmission method each capable of reducing decoding errors and improving throughput in the coordinated communication in a case of receiving preambles transmitted from a plurality of transmission apparatuses (e.g., APs) in the coordinated communication.

### [Configuration of Radio Communication System]

A radio communication system according to an embodiment of the present disclosure includes at least two sources (e.g., APs or STAs) and at least one destination (e.g., AP or STA). In the following description, the source corresponds to a "transmission apparatus" and the destination corresponds to a "reception apparatus". For example, the two source APs correspond to a "first transmission apparatus" and a "second transmission apparatus" respectively. Further, the destination STA to which the two source APs perform coordinated transmission may correspond to, for example, a target reception apparatus of the coordinated transmission.

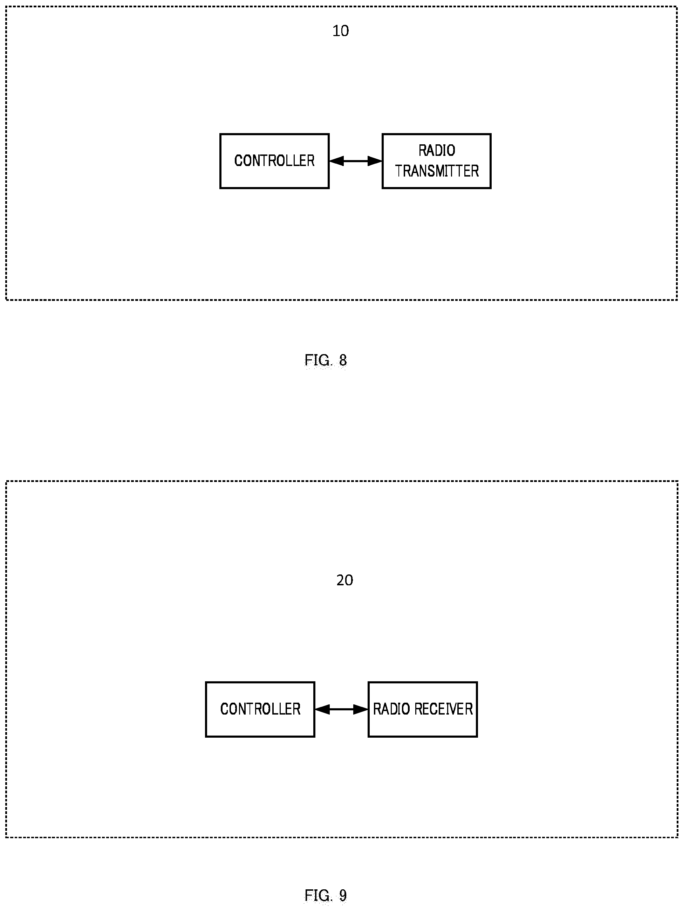

FIG. 8 is a block diagram illustrating an exemplary configuration of a part of transmission apparatus 10. Transmission apparatus 10 illustrated in FIG. 8 includes a controller, which is exemplary control circuitry, and a radio transmitter, which is exemplary transmission circuitry. For example, transmission apparatus 10 illustrated in FIG. 8 is the first transmission apparatus, and performs coordinated transmission with the second transmission apparatus.

When the first transmission apparatus and the second transmission apparatus perform the coordinated transmission, the controller in FIG. 8 generates first control information including shared information with at least part of second control information transmitted in a second preamble by the second transmission apparatus.

The radio transmitter in FIG. 8 transmits the first control information in a first preamble.

FIG. 9 is a block diagram illustrating an exemplary configuration of a part of reception apparatus 20. Reception apparatus 20 illustrated in FIG. 9 includes a controller and a radio receiver.

The radio receiver in FIG. 9 receives reception signals including preambles from a plurality of transmission apparatuses.

The controller in FIG. 9 demodulates the reception signals based on the preambles.

Note that transmission apparatus 10 illustrated in FIG. 8 is not limited to being an AP, and may be an STA, for example. An AP and STA may perform the coordinated transmission, for example.

### (Embodiment 1)

In Embodiment 1, at least part of control information included in a preamble is configured to be the same information (same value) among preambles transmitted by APs in coordination with each other. In other words, when AP 1 and AP 2 perform coordinated transmission, AP 1 generates control information including information common to (information shared with) at least part of control information transmitted in a preamble by AP 2. AP 1 then transmits the generated control information in a preamble.

Note that the method of configuring the same value is not particularly limited. For example, at least part of control information included in a preamble may be replaced with AP group specific information (or AP group specific parameters). At least part of control information included in a preamble may be a common value for the AP group. Control information configured to be the same value may be the BSS color or a whole U-SIG. In addition, the preamble may be a preamble transmitted simultaneously in coordination, or a preamble included in data transmitted in coordination in response to a trigger signal. A configuration and operation according to the present embodiment will be described in <Embodiment 1-1>.

In Embodiment 1, the control information configured to be the same value may be the user-specific field or a whole EHT-SIG, or may be a guard interval (GI) or the EHT-LTF, in addition to the U-SIG or the BSS color. Note that all control information included in a preamble may be configured to be the same value. An operation according to the present embodiment will be described in <Embodiment 1-2>.

In Embodiment 1, the change in control information included in a preamble may be indicated by a control packet transmitted in advance. An operation according to the present embodiment will be described in <Embodiment 1-3>.

In the following, a description will be given of an exemplary operation including a configuration of control information included in a preamble when downlink coordinated communication is performed using the C-OFDMA, by way of example. Note that a configuration and operation related to uplink communication may be omitted in the following description. In a case of uplink communication, the same configuration and operation may be applied to preambles of packets for a plurality of different APs (e.g., packet from STA 1 to AP 1 and packet from STA 2 to AP 2).

### [Configuration of AP]

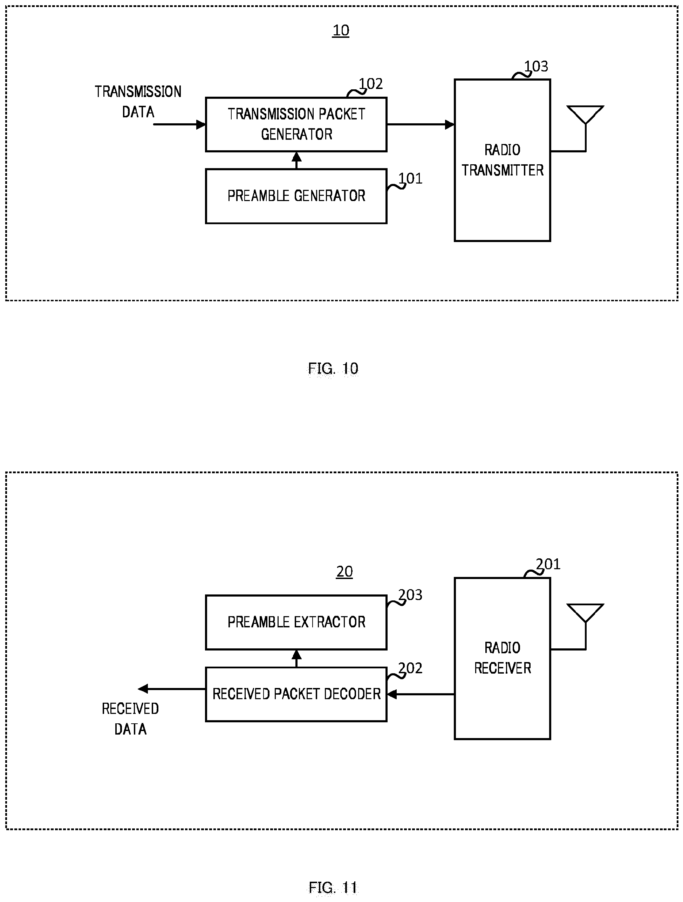

FIG. 10 is a block diagram illustrating an exemplary configuration of AP 10.

AP 10 includes preamble generator 101, transmission packet generator 102, and radio transmitter 103. Preamble generator 101 and transmission packet generator 102 may be included in the controller (see FIG. 8), for example.

Preamble generator 101 configures information (value or parameter) in each of fields included in a format of a preamble to generate the preamble with the format. The preamble to be generated will be described later.

Transmission packet generator 102 acquires transmission data and the preamble, generates a packet including the transmission data and the preamble, and outputs the generated packet to radio transmitter 103.

Radio transmitter 103 converts the acquired packet into a radio signal, and transmits the signal via an antenna.

### [Configuration of STA]

FIG. 11 is a block diagram illustrating an exemplary configuration of STA 20.

STA 20 includes radio receiver 201, received packet decoder 202, and preamble extractor 203. Received packet decoder 202 and preamble extractor 203 may be included in the controller (see FIG. 9), for example.

Radio receiver 201 receives a radio signal via an antenna, and outputs the received signal (e.g., received packet) to received packet decoder 202 after performing radio signal processing such as frequency conversion and demodulation processing.

Received packet decoder 202 separates a preamble and a received data portion from the received packet, and outputs the preamble to preamble extractor 203.

Preamble extractor 203 outputs at least part of information extracted from the preamble to received packet decoder 202.

Received packet decoder 202 decodes the received data portion based on the information acquired from preamble extractor 203. Then, received packet decoder 202 outputs the received data obtained by decoding to a data processor (not illustrated) in a higher layer.

### <Embodiment 1-1>

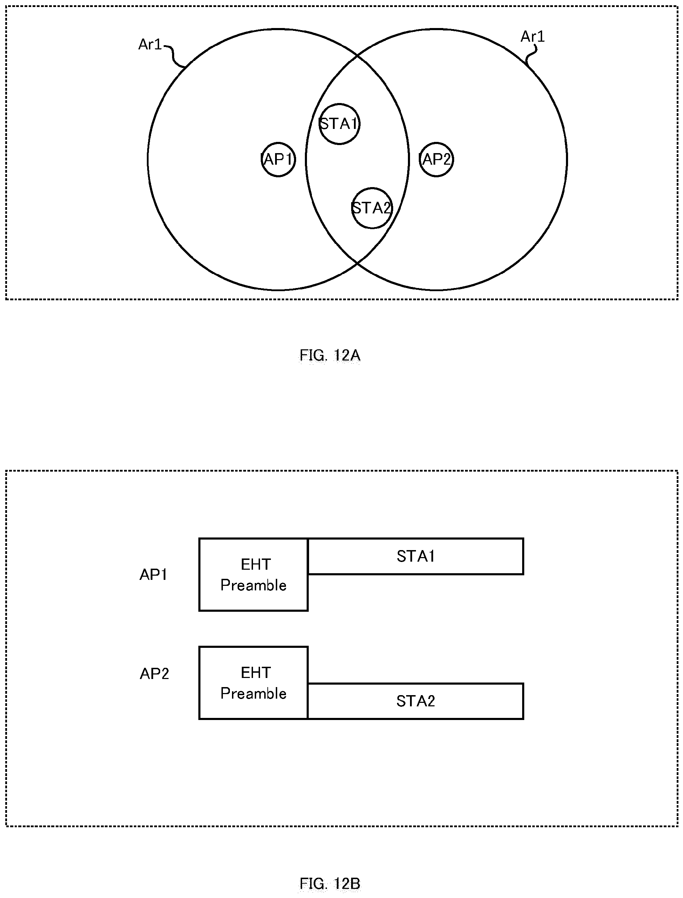

FIG. 12A illustrates exemplary relationships among APs performing the C-OFDMA transmission and STAs. FIG. 12B illustrates exemplary signals transmitted by the APs illustrated in FIG. 12A.

FIG. 12A illustrates two APs (AP 1 and AP 2) and two STAs (STA 1 and STA 2). STA 1 and STA 2 are located in radio wave coverage Ar 1 of AP 1 and radio wave coverage Ar 2 of AP 2, and receive signals transmitted by AP 1 and AP 2. In FIG. 12A, AP 1 performs C-OFDMA transmission to STA 1, and AP 2 performs C-OFDMA transmission to STA2.

FIG. 12B illustrates examples of a signal transmitted to STA 1 by AP 1 using the C-OFDMA transmission and a signal transmitted to STA 2 by AP 2 using the C-OFDMA transmission. As illustrated in FIG. 12B, data transmitted to STA 1 by AP 1 and data transmitted to STA 2 by AP 2 are transmitted by using different resources in the frequency direction. Meanwhile, AP 1 and AP 2 transmit preambles (EHT preambles) at the same time (same time period) in the same frequency.

The preamble is a signal in units of sub channels (e.g., 20 MHz band), and even when the data is a signal in a part of the frequency band for the preamble, the preamble may be a signal in the frequency band of the sub channel (e.g., 20 MHz band). In a case where the preamble is the EHT preamble, for example, the BSS color is included in the U-SIG field illustrated in FIG. 3.

AP 1 and AP 2 respectively have individual BSS colors. In non-coordinated communication, AP 1 and AP 2 transmit preambles including the respective individual BSS colors. In coordinated transmission (e.g., C-OFDMA transmission), AP 1 and AP 2 may configure the same value for the BSS color included in a preamble of AP 1 and the BSS color included a preamble of AP 2, and transmit the preambles including the BSS colors with the same value.

Note that an AP that starts transmission by carrier sense multiple access/collision avoidance (CSMA/CA) is referred to as a sharing AP (also "coordinator AP" or "first AP"), and an AP for which multi-AP coordination is controlled by the sharing AP may be referred to as a shared AP (also "coordinated AP" or "second AP").

The BSS color with the same value may be a fixed value for APs in an AP group, and for example, may be the BSS color of the sharing AP. Alternatively, the BSS color with the same values may be the BSS color of a master AP described in NPL 5.

When the BSS color included in a preamble is the BSS color of coordination APs, a destination STA may perform the same operation as when the BSS color included in a preamble is the BSS color of an association AP. Note that the BSS color of the coordination APs may be indicated to the STA in advance. This indication may be performed in an association process or using a beacon.

This allows AP 1 and AP 2 to transmit the BSS colors with the same value, and STA 1 and STA 2 that receives radio waves from both AP 1 and AP 2 can receive the same BSS color; accordingly, a decoding error of the BSS color is less likely to occur. Further, the BSS color is a value referred to by each of the destination STAs, and it is thus possible to reduce the possibility of the decoding error in each of the transmission destination STAs.

Note that the BSS color with the same values may be information different from the BSS colors of AP 1 and AP 2, and for example, may be AP group specific information. In other words, the BSS color configured in the coordinated transmission may be different from the BSS colors of APs configured in the non-coordinated transmission. For example, the AP group specific information may be a BSS color common in an AP group (hereinafter, referred to as a "BSS color for coordination"). In this case, the BSS color for coordination may be indicated in advance to the STAs with which the AP is associated. This indication may be performed in an association process or using a beacon.

The AP group may be a static multi-AP group, dynamic multi-AP group (see NPL 6), or virtual BSS (see NPL 7). Alternatively, the AP group may be specified by an AP with which the BSS color for coordination is provided first (AP not receiving a beacon specifying the BSS color for coordination).

This allows the STA to receive a preamble including the BSS color of the association AP in the non-coordinated communication and to receive a preamble including the BSS color for coordination in the coordinated communication. Accordingly, the STA can determine the presence or absence of coordination based on the received preamble, and can perform spatial reuse between the association AP and an AP other than the association AP in the non-coordinated communication.

An AP included in the static multi-AP group, dynamic multi-AP group, or virtual BSS may have a BSS color common in the AP group (AP group specific information) for both the non-coordinated communication and the coordinated communication.

The BSS color for coordination may be a virtual BSS color or a multi-AP group color.

Further, although FIG. 12B illustrates examples of signals when the C-OFDMA is performed in a single sub channel, the C-OFDMA transmission may be performed in a plurality of sub channels.

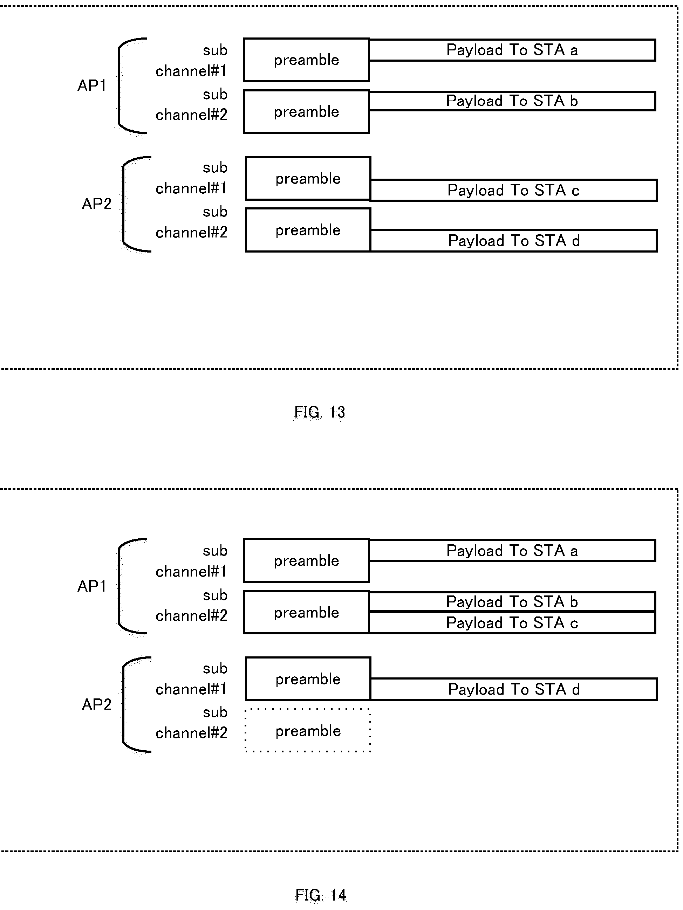

FIG. 13 illustrates the first example of signals in the C-OFDMA transmission. FIG. 13 illustrates exemplary signals transmitted in two sub channels by AP 1 and AP 2 using the C-OFDMA. In the example of FIG. 13, AP 1 transmits a signal to STAa in sub channel #1 and transmits a signal to STA b in sub channel #2. AP 2 transmits a signal to STA c in sub channel #1 and transmits a signal to STA d in sub channel #2. Different resources in the frequency direction are used for data transmitted to STA a by AP 1 and data transmitted to STA c by AP 2. Also, different resources in the frequency direction are used for data transmitted to STA b by AP 1 and data transmitted to STA d by AP 2. Meanwhile, a preamble transmitted by AP 1 in sub channel #1 and a preamble transmitted by AP 2 in sub channel #1 are transmitted at the same time (same time period) in the same frequency. As in sub channel # 1, preambles transmitted in sub channel #2 are transmitted at the same time (same time period) in the same frequency.

Even in such a case, the preambles transmitted in sub channel #1 may be preambles with the same value as each other. The preambles transmitted in sub channel #2 may also be preambles with the same value as each other. Note that the preambles transmitted in sub channel #1 and the preambles transmitted in sub channel #2 may be preambles with the same value or different values.

FIG. 14 illustrates the second example of signals in the C-OFDMA transmission. FIG. 14 illustrates exemplary signals transmitted in two sub channels by AP 1 and AP 2 using the C-OFDMA. In the example of FIG. 14, AP 1 transmits a signal to STAa in sub channel #1 and transmits a signal to STAb and STA c in sub channel #2. AP 2 transmits a signal to STA d in sub channel #1. Different resources in the frequency direction are used for data transmitted to STA a by AP 1 and data transmitted to STA d by AP 2. Also, different resources in the frequency direction are used for data transmitted to STA b by AP 1 and data transmitted to STA c by AP 1. Meanwhile, a preamble transmitted by AP 1 in sub channel #1 and a preamble transmitted by AP 2 in sub channel #1 are transmitted at the same time (same time period) in the same frequency. AP 2 does not use sub channel #2, and thus AP 2 need not transmit a preamble in sub channel #2. In this case, the preamble transmitted by AP 1 in sub channel #2 does not overlap with another preamble at the same time (same time period) in the same frequency.

In such a case, the preambles transmitted in sub channel #1 may be preambles with the same value. Since sub channel # 2 is not used by AP 2, the preambles transmitted in sub channel #2 need not be preambles with the same value. Note that the preambles transmitted in sub channel #1 and the preambles transmitted in sub channel #2 may be preambles with the same value or different values.

### <Embodiment 1-2>

In Embodiment 1-1, control information configured to be the same value may be the user-specific field or a whole EHT-SIG, in addition to the U-SIG or the BSS color.

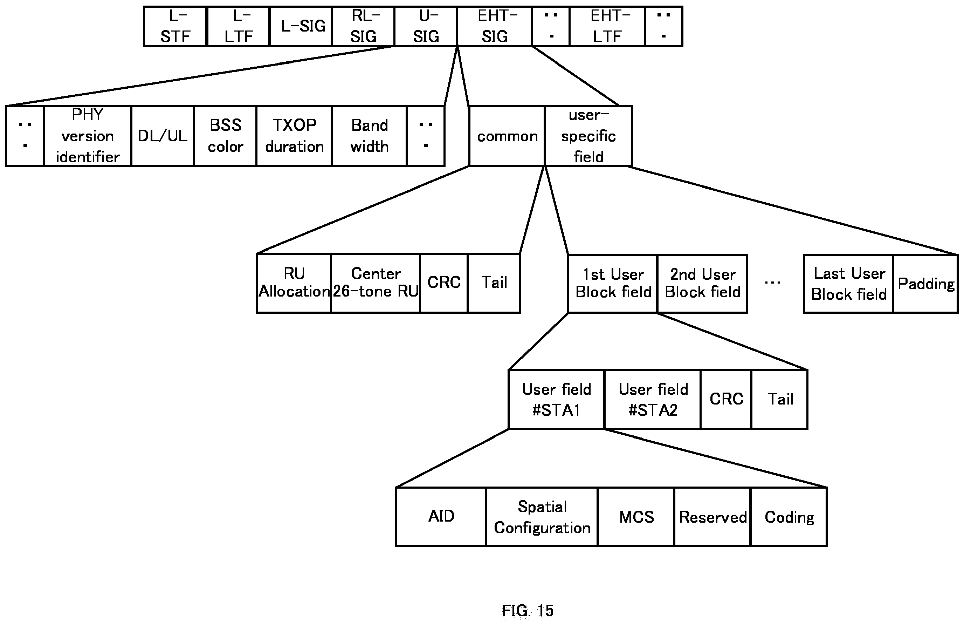

FIG. 15 illustrates an exemplary format of the EHT preamble. The common and user field in FIG. 15 have the same configuration as that of the HE-SIG-B in the HE preamble illustrated in FIG. 4.

For example, a single user block field includes information portions of two destination STAs (user field #STA 1 and user field #STA 2). For example, the number of included user block fields is the number obtained by dividing the number of destination STAs by 2 and rounding up. In FIG. 15, they are represented by "1st user block field", "2nd user block field"... and "last user block field".

The user-specific field included in the EHT preamble may include information portions of STAs that are respective destinations of coordination APs.

For example, in the example of FIG. 12A, the destination STAof AP 1 is STA 1 and the destination STA of AP 2 is STA 2. In this example, the destination STAs of coordination APs are STA 1 and STA 2. Since the number of destination STAs of the coordination APs is two, the user-specific field includes a single user block field (e.g., 1st user block field). Thus, in the example of FIG. 12A, the AID of user field #STA 1 in the 1st user block field is configured to be the AID of STA 1 in FIG. 12A, and the AID of user field #STA 2 is configured to be the AID of STA 2 in FIG. 12A.

In a case where an association AP individually specifies the AID of the STA, each of the coordination APs may be configured not to assign a duplicate AID to the STA so that the destination STA can be identified. For example, each AP may specify an AID assignment range and assign the AID to the associated STA within the range.

Note that each AP may indicate the assignment range to the coordination AP so that the assignment ranges do not overlap between the APs. The indicated AP may specify an assignment range that does not overlap with the indicated assignment range. The assignment range of each AP may be indicated by a beacon.

Further, in order to identify the destination STA, information for specifying the source AP may be added to the individual information for each STA (information corresponding to the user field of HE-SIG-B). Note that the information for specifying the source AP may be a value linked with the BSS color (referred to as "partial BSS color") in order to reduce the number of bits in the preamble. The information for specifying the source AP (partial BSS color) may be indicated to the STA in an association process or using a beacon.

The AID specification for STAs may be performed by an apparatus that manages the static multi-AP group or virtual BSS or by (predetermined) one of the coordination APs (e.g., master AP in a case of master/slave APs) so that the AIDs of STAs respectively associated with the coordination APs do not overlap with each other.

EHT-SIG MCS included in the U-SIG may have the same value so that modulation signals for the EHT-SIG are the same.

Further, the GI (including GI-type) determined by influence of multipath interference, such as moving speed of a destination STA, may have the same value between coordination APs so that the values of control information included in a preamble are the same. EHT-LTF (including EHT-LTF size and EHT-LTY type) determined from the number of MIMO multiplexes may be the same value, and frequency division, code multiplexing (e.g., p-matrix), or time division may be performed for the APs.

### <Embodiment 1-3>

The change in the control information included in a preamble described in Embodiment 1-1 and Embodiment 1-2 may be indicated by a control packet transmitted in advance (e.g., before transmitting a packet including the preamble).

### [Configuration of AP]

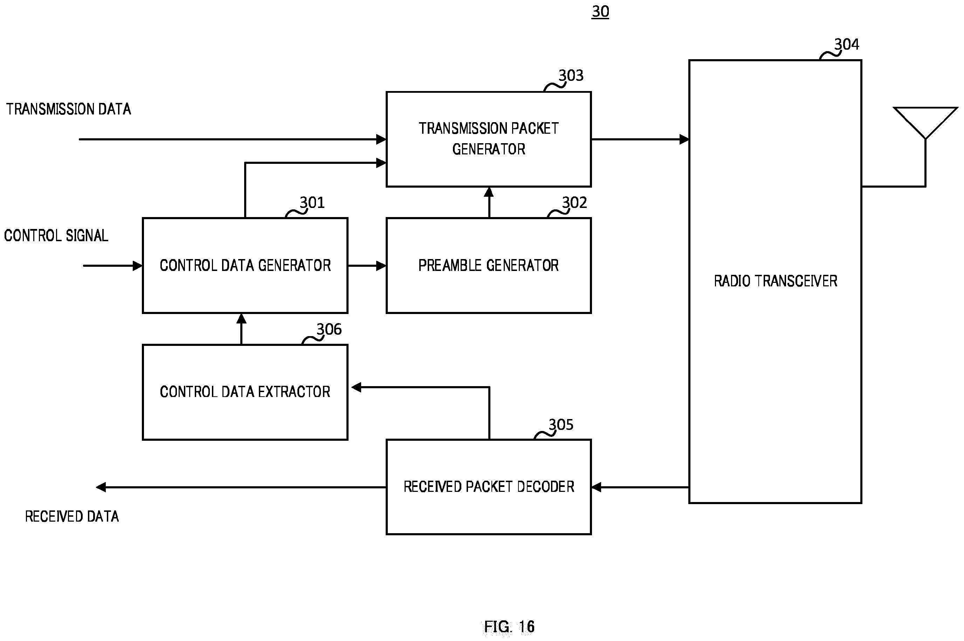

FIG. 16 is a block diagram illustrating an exemplary configuration of AP 30. AP 30 illustrated in FIG. 16 includes control data generator 301, preamble generator 302, transmission packet generator 303, radio transceiver 304, received packet decoder 305, and control data extractor 306.

Control data generator 301 acquires a control signal (or control information) or control data from control data extractor 306, which will be described later, and generates control data for a control packet and/or control data to be configured in a preamble. Control data generator 301 outputs the control data for the control packet to transmission packet generator 303. Control data generator 301 also outputs the control data to be configured in the preamble to preamble generator 302.

Preamble generator 302 configures information (value or parameter) in each of fields included in a format of the preamble to generate the preamble with the format. Here, preamble generator 302 may refer to the control data of control data generator 301.

Transmission packet generator 303 acquires transmission data and the preamble, and generates a packet (data packet) including the transmission data and the preamble. Transmission packet generator 303 also generates a control packet including the control data for the control packet acquired from control data generator 301. Transmission packet generator 303 outputs the generated packets to radio transceiver 304.

Radio transceiver 304 converts the acquired packets into a radio signal, and transmits the signal via an antenna. In addition, radio transceiver 304 receives a radio signal via the antenna, and outputs the received signal (e.g., received packet) to received packet decoder 305 after performing radio signal processing such as frequency conversion and demodulation processing.

Received packet decoder 305 separates a received data portion from the received packet, and decodes the received data portion. Received packet decoder 305 outputs the received data obtained by decoding to a data processor (not illustrated) in a higher layer. In addition, received packet decoder 305 acquires control data from the received packet, and outputs the control data to control data extractor 306.

Control data extractor 306 determines the control data to be indicated to an STA or coordination counterpart AP based on the acquired control data, and outputs the determined control data to control data generator 301.

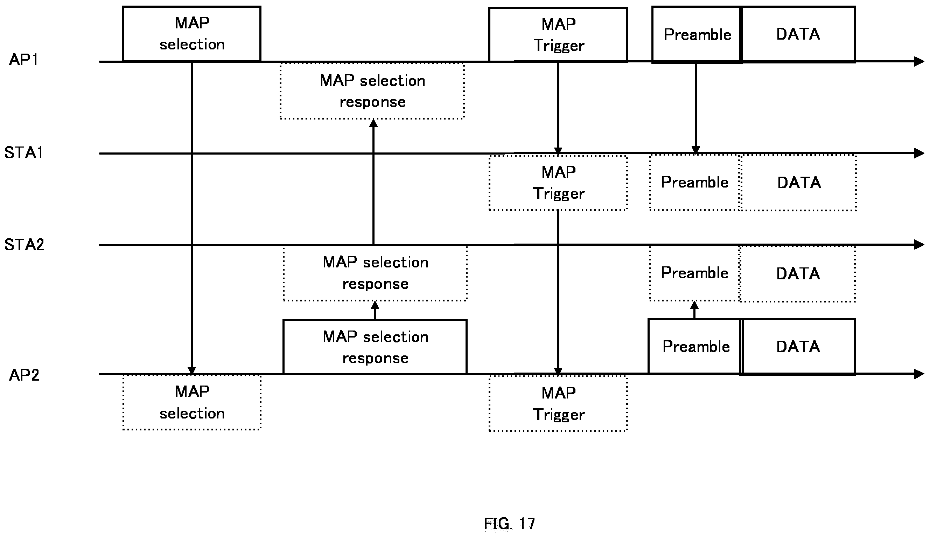

FIG. 17 illustrates an exemplary operation of the C-OFDMA transmission including transmission and reception of the control packets.

In FIG. 17, AP 1 uses the MAP selection to indicate, to AP 2, information for configuring the same value to control information included in preambles for coordinated transmission. For example, the information indicated using the MAP selection may include information specified in the BSS color and/or the user-specific field.

Note that the BSS color to be indicated may be any of the BSS color of a sharing AP, the BSS color of a master AP, and the BSS color for coordination, described in Embodiment 1-1. Alternatively, the U-SIG including the BSS color may be indicated instead of the indication of the BSS color.

The information specified in the user-specific field to be indicated may be the EHT-SIG included in a preamble in the coordinated transmission. Destination STA assignment for AP 2 may be determined by at least one of AP 1, a master AP, an apparatus managing a static multi-AP group, and an apparatus managing a virtual BSS. Alternatively, the destination STA assignment for AP 2 may be determined by AP 2. In a case where AP 2 determines the assignment, the EHT-SIG indicated from AP 1 may be values excluding the STA assignment for AP 2.

AP 2 changes the AID of the destination STA of AP 2, which is indicated by the MAP selection or selected by AP 2, to the AID in an unused area. Note that the unused area of the AID may be defined in the specification. Information on the unused area of the AID may be included in AP group specific information, and indicated to a master AP, or an AP accommodating an apparatus managing a static multi-AP group or an apparatus managing a virtual BSS. Alternatively, the information on the unused area of the AID may be indicated by a first provided AP using a beacon. The first provided AP may be, for example, an AP that does not receive a beacon specifying the unused area of the AID.

AP 2 indicates, to an association STA using the MAP selection response, the BSS color included in the preamble for the coordinated transmission, and the original and changed AIDs of the destination STA of AP 2. AP 2 also indicates, to AP 1 using the MAP selection response, the original and changed AIDs of the destination STA of AP 2.

The STA associated with AP 2 determines the source of a packet received after the MAP selection response based on a preamble of the received packet. For example, when the BSS color included in the preamble is the BSS color indicated by the MAP selection response, the STA determines that the source of the received packet is the association AP. When the original AID indicated by the MAP selection response is the AID of the STA, the STA replaces the AID of the STA with the changed AID for the next packet reception from the association AP.

AP 1 indicates, to an association STA using the MAP selection or the MAP trigger, the BSS color included in the preamble for the coordinated transmission.

The STA associated with AP 1 determines the source of a packet received after the BSS color is indicated using the MAP selection or the MAP trigger, based on the preamble of the received packet. For example, when the BSS color included in the preamble is the BSS color indicated by the MAP selection or the MAP trigger, the STA determines that the source of the received packet is the association AP.

Note that, although FIG. 17 illustrates an exemplary operation of AP 2 indicating the change of the AID by the MAP selection response, AP 1 may indicate the original and changed AIDs by the MAP selection or the MAP trigger. In this case, the STA (e.g., STA x) associated with AP 1 replaces the AID of STA x with the changed AID for the next packet reception from the association AP when the original AID indicated by the MAP selection response is the AID of STA x.

This allows the BSS color for coordination to be specified before the coordinated transmission, and the BSS color of an AP group including coordination APs can be specified even when the combination of coordination APs changes dynamically (e.g., dynamic multi-AP group). Further, the number of unused areas of the AID can be regarded as the number of OFDMA transmission counterpart STAs.

In addition, although the described example uses control signals called the MAP selection, MAP selection response, and MAP trigger, the present disclosure is not limited to this. For example, some or all of the control signals may be transmitted and received by wired communication. In a case where some or all of the control signals do not reach between APs, the communication may be via a relay station (e.g., STA and AP located between the APs).

Further, in FIG. 17, the control packets transmitted in advance (e.g., before a packet including data is transmitted) are the MAP selection, MAP selection response, and MAP trigger, but the present disclosure is not limited to this. The control packet transmitted in advance may be a packet called a COA frame and trigger frames (see NPL 8).

### (Embodiment 2)

In Embodiment 2, when the coordinated transmission scheme is CSR, control information included in a preamble includes frequency band allocation information including the number of destination STAs of the coordinated transmission. An operation for this example will be described in <Embodiment 2-1>.

In Embodiment 2, a description will be given of an example where a table to be referenced for the RU allocation is switched according to information indicating the presence or absence of coordination. An operation for this example will be described in

### <Embodiment 2-2>.

In Embodiment 2, a description will also be given of an example where a table to be referenced for the RU allocation is switched according to the number of coordination APs. An operation for this example will be described in <Embodiment 2-3>.

In addition, in Embodiment 2, a description will be given of an example where a table to be referenced for the RU allocation is switched according to the transmission frequency bandwidth. An operation for this example will be described in <Embodiment 2-4>.

Further, in Embodiment 2, a description will be given of an example where the presence or absence of coordination is indicated in the user field. An operation for this example will be described in <Embodiment 2-5>.

### <Embodiment 2-1>

When the coordinated transmission scheme is CSR, the control information included in the preamble described in Embodiment 1-1 and Embodiment 1-2 may include frequency band allocation information including the number of destination STAs of the coordinated transmission. The frequency band allocation information may be, for example, information indicated by the indices in the table of information configured for the RU allocation described in FIG. 5.

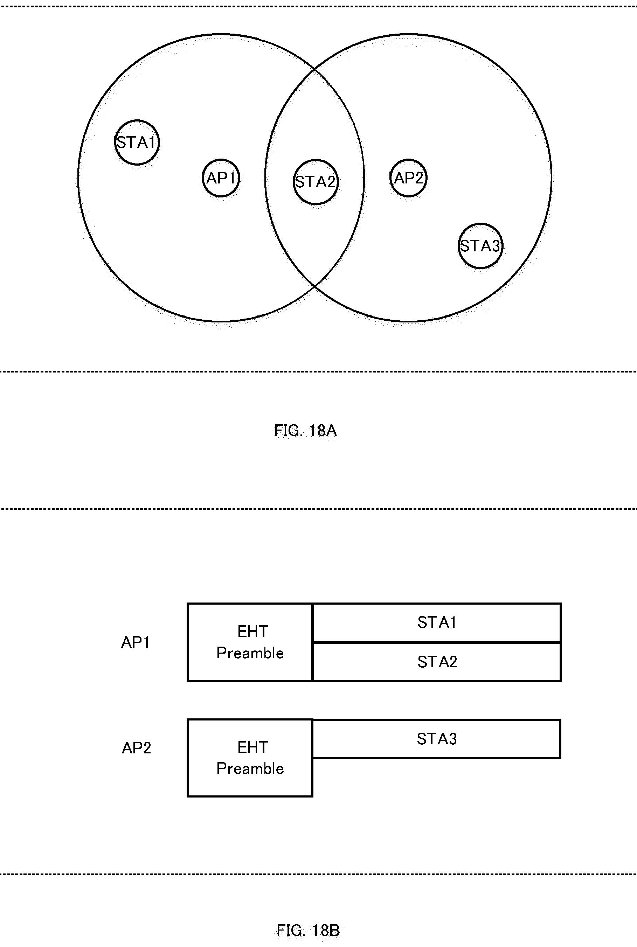

FIG. 18A illustrates exemplary relationships among APs and STAs when the C-OFDMA and CSR are combined. FIG. 18B illustrates exemplary signals transmitted and received among the APs and STAs illustrated in FIG. 18A.

FIG. 18A illustrates two APs (AP 1 and AP 2) and three STAs (STA 1, STA 2, and STA 3). In FIG. 18A, AP 1 transmits signals to STA 1 and STA 2, and AP 2 transmits a signal to STA 3.

As illustrated in FIG. 18A and FIG. 18B, AP 1 performs C-OFDMA transmission to STA 1 and STA 2, and CSR transmission is performed in the transmission to STA 1 by AP 1 and the transmission to STA 3 by AP 2. In this example, the same value is configured to preambles transmitted by AP 1 and AP 2 as described in Embodiment 1-1 and Embodiment 1-2. This makes a preamble decoding error less likely to occur since the preambles of signals received by STA 2, which is located in a position where radio waves from both AP 1 and AP 2 are reachable, have the same value when STA 2 receives signals from AP 1 and AP 2.

In 11ax, the number of frequency bands (hereinafter referred to as "RU") for transmission and the number of MIMO multiplexes are specified by referring to the RU allocation table (exemplary reference information) described in FIG. 5, and the user field specifies the number of destination STAs that is the same as the numbers of RUs and MIMO multiplexes specified by referring to the RU allocation table. Note that, in the table of FIG. 5, the number of MIMO multiplexes is represented by y0, y1, and y2 in the indices.

To configure the same value to the user-specific fields of coordination APs, it is preferable that the preamble includes the user fields for respective destination STAs of the coordination APs.

In the example illustrated in FIG. 18A and FIG. 18B, signals (data signals) addressed to STA 1 and STA3 are transmitted in the same RU, for example. In CSR, signals for a plurality of STAs are multiplexed in the same RU. For example, the number of STAs multiplexed by CSR is 1 in the example of FIG. 18B. Thus, the RU allocation table in FIG. 5 cannot specify the number of destination STAs for each AP. For example, the user-specific fields of coordination APs can be configured to be the same value by using a table that can indicate the number of STAs multiplexed by CSR, as described below.

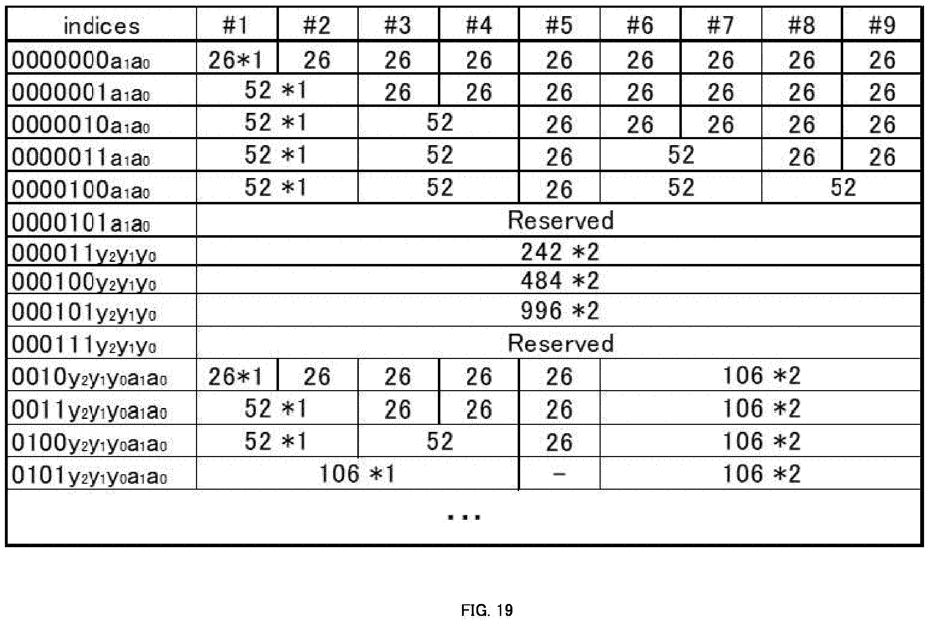

FIG. 19 illustrates the first example of the RU allocation table according to the present embodiment.

In the table in FIG. 19, the 9-bit indices indicate that the maximum number of STAs multiplexed by CSR is three. #1, #2, ..., #9 in FIG. 19 represent tone numbers. In addition, "a0, a1" in the 9-bit indices represents the number of STAs multiplexed by CSR. For example, the number of STAs multiplexed by CSR is expressed as "a1 × 2 + a0". Here, the number 0 of multiplexes (i.e., "a1, a0" = "0, 0") indicates no CSR coordinated transmission. Further, the tone numbers marked with "^{∗}1" in FIG. 19 represent RUs where the CSR multiplexing is performed. For example, in a case where the indices are "0000000 a1, a0", CSR multiplexing of STAs, the number of which is represented by a0, a1, is performed in the resource with tone number #1.

Further, "y0, y1, y2" in the indices represents the number of MIMO multiplexes. Additionally, "^{∗}2" in FIG. 19 represents RU where the MIMO multiplexing is performed. For example, the number of MIMO multiplexes is expressed as "y2 × 4 + y1 × 2 + y0". Here, the number 0 of multiplexes (i.e., "y2, y1, y0" = "0, 0, 0") indicates no MIMO multiplexing. For example, in a case where the indices are "000011 y2, y1, y0", the MIMO multiplexing, the number of which is represented by y0, y1, y2, is performed in the 242-tone resource composed of tone numbers #1 to #9.

Further, in a case where the indices are "0101y₂y₁y₀a₁a₀", the CSR multiplexing of STAs, the number of which is represented by a0, a1, is performed in the 106-tone resource corresponding to tone numbers #1 to #4, and the MIMO multiplexing, the number of which is represented by y0, y1, y2, is performed in the 106-tone resource corresponding to tone numbers #6 to #9.

In the example illustrated in FIG. 18A and FIG. 18B, the indices are "010100001" (no MIMO multiplexing and the number of multiplexed STAs is 1 with "0101y₂y₁y₀a₁a₀" applied). Further, three user fields are assigned (two for tone numbers #1, 2, 3, and 4, and one for tone numbers #6, 7, 8, and 9). In the user fields, the AIDs of STA 1 and STA 3 are configured to #1, 2, 3, and 4, and the AID of STA 2 is configured to #6, 7, 8, and 9.

### <Embodiment 2-2>

In Embodiment 2-1, the table to be referenced for the RU allocation may be switched according to information indicating the presence or absence of coordination. For the information indicating the presence or absence of coordination, the BSS color for coordination described in Embodiment 1-1 may be used, or a flag indicating the presence or absence of coordination may be added to a preamble.

The table to be referenced for the RU allocation according to the information indicating the presence or absence of coordination is not particularly limited. In a case of the absence of coordination, for example, the RU allocation table illustrated in FIG. 5 may be used. In a case of the presence of coordination, the following RU allocation table may be used.

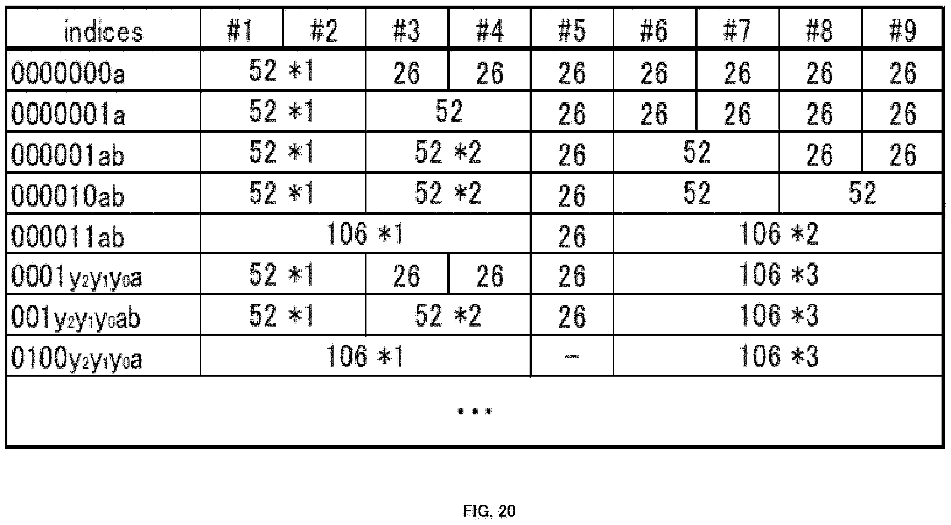

FIG. 20 illustrates the second example of the RU allocation table according to the present embodiment.

In the table in FIG. 20, the 8-bit indices indicate that the maximum number of STAs multiplexed by CSR is two. #1, #2, ..., #9 in FIG. 20 represent tone numbers. In addition, "a, b" in the 8-bit indices represents the number of STAs multiplexed by CSR. "^{∗}1" in FIG. 20 represents RUs where the CSR multiplexing represented by a is performed. "^{∗}2" in FIG. 20 represents RUs where the CSR multiplexing represented by b is performed. Further, "y0, y1, y2" in the 8-bit indices represents the number of MIMO multiplexes. "^{∗}3" in FIG. 20 represents RUs where the MIMO multiplexing is performed. For example, the number of STAs multiplexed by CSR is represented by "a + 1" and "b + 1". Further, the number of MIMO multiplexes is expressed as "y2 × 4 + y1 × 2 + y0", for example. Here, the number 0 of multiplexes indicates no MIMO.

For example, in a case where the indices are "0100y₂y₁y₀a", the CSR multiplexing of STAs, the number of which is represented by a, is performed in the 106-tone resource corresponding to tone numbers #1 to #4, and the MIMO multiplexing, the number of which is represented by y0, y1, y2, is performed in the 106-tone resource corresponding to tone numbers #6 to #9.

In the example illustrated in FIG. 18Aand FIG. 18B, the indices are "01000000" (no MIMO multiplexing and the number of multiplexed STAs is 1 with "0100y₂y₁y₀a" applied). Further, three user fields are assigned (two for tone numbers #1, 2, 3, and 4, and one for tone numbers #6, 7, 8, and 9). In the user fields, the AIDs of STA 1 and STA 3 are configured to #1, 2, 3, and 4, and the AID of STA 2 is configured to #6, 7, 8, and 9.

When the table in the case of the presence of coordination is different from the table in the case of the absence of coordination, the table in the case of the presence of coordination includes the patterns for the presence of coordination and does not include the patterns for the absence of coordination, thereby reducing the number of bits of the RU allocation to be transmitted or increasing the allocation patterns.

### <Embodiment 2-3>

In Embodiment 2-1, the table to be referenced for the RU allocation may be switched according to the number of coordination APs. Information indicating the number of coordination APs may be added to a preamble.

The table referenced for the RU allocation according to the number of coordination APs is not particularly limited. The RU allocation table illustrated in FIG. 5 may be used when, for example, the number of coordination APs is 0 (i.e., no coordination).

The following is an exemplary RU allocation table in a case where the number of coordination APs is 1 or more. The exemplary RU allocation tables below are for the case where the number of coordination APs is 1 and the case where the number of coordination APs is 2.

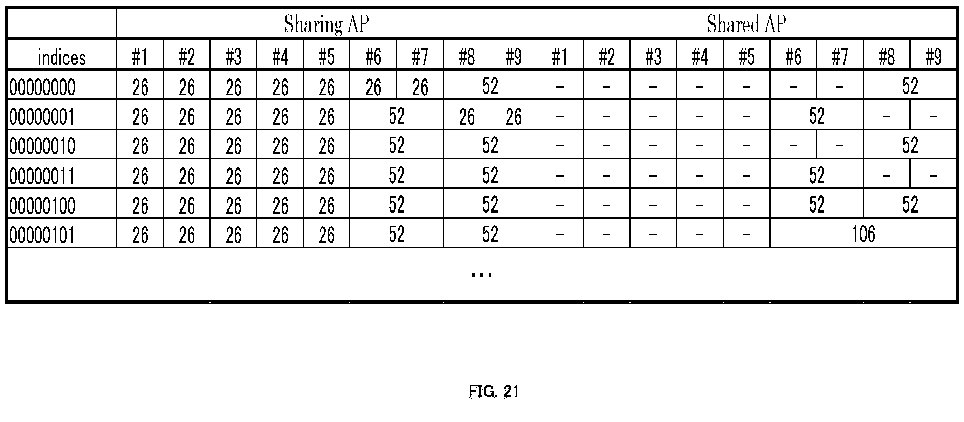

FIG. 21 illustrates the third example of the RU allocation table according to the present embodiment. In FIG. 21, the 8-bit indices are associated with allocation for each of a single sharing AP and a single shared AP in coordination with the sharing AP.

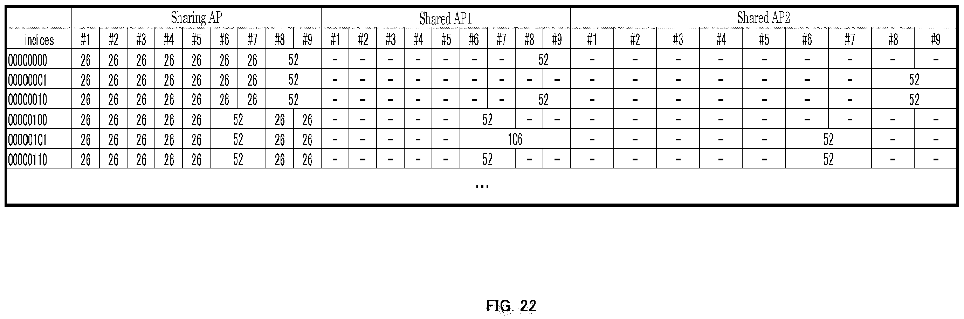

FIG. 22 illustrates the fourth example of the RU allocation table according to the present embodiment. In FIG. 22, the 8-bit indices are associated with allocation for each of a single sharing AP and two shared APs in coordination with the sharing AP.

In FIG. 21 and FIG. 22, the columns of RUs with no coordination are marked with "-", and the columns of RUs with coordination are marked with the number of tones.

For example, in FIG. 22, when the indices are "00000101", shared AP 1 performs coordinated transmission in the RUs with tone numbers #6, 7, 8, and 9, and shared AP 2 performs coordinated transmission in the RUs with tone numbers #6 and 7.

As described above, the present embodiment makes it possible to specify individual RUs for each coordination AP.

### <Embodiment 2-4>

In Embodiment 2-1, Embodiment 2-2, or Embodiment 2-3, the table referenced for the RU allocation may be switched according to the transmission frequency bandwidth. Note that the transmission frequency bandwidth may be information indicated by the Band width included in the U-SIG of a preamble.

When the transmission frequency bandwidth is 242 tones (20 MHz), at least one of the RU allocation tables in FIGS. 19, 20, 21, and 22 may be used, and the table may be switched according to the presence or absence of coordination or the number of coordination APs.

The following is an exemplary RU allocation table in a case where the transmission frequency bandwidth is 484 tones (40 MHz).

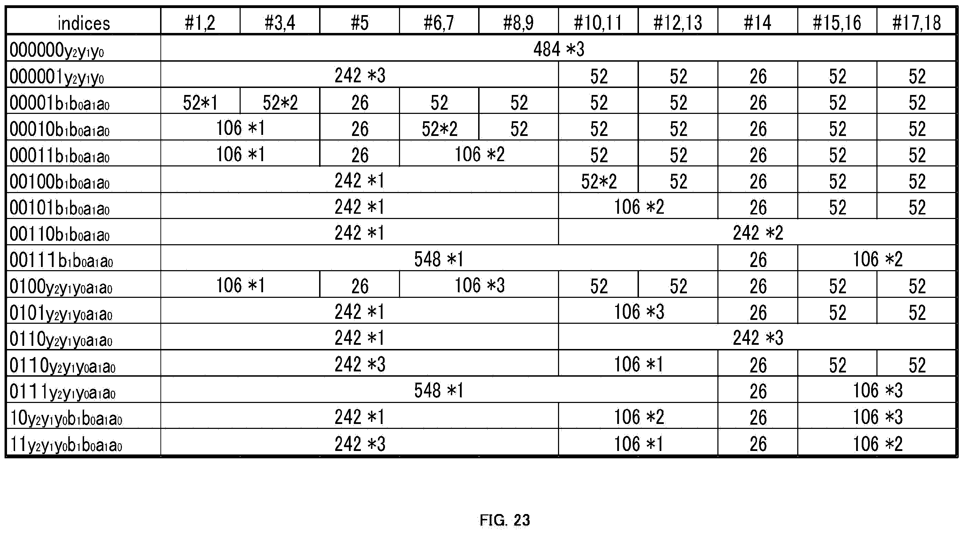

FIG. 23 illustrates the fifth example of the RU allocation table according to the present embodiment. FIG. 23 illustrates an exemplary RU allocation table in a case where the transmission frequency bandwidth is 484 tones (40 MHz).

In the example of FIG. 23, the size of allocatable RU is 52 tones or more in the tone numbers except #5 and #14. Note that the tone numbers marked with "^{∗}1" in FIG. 23 represent RUs where STAs the number of which is indicated by a0, a1 are multiplexed. "^{∗}2" in FIG. 23 represent RUs where STAs the number of which is indicated by b0, b1 are multiplexed. "^{∗}3" in FIG. 23 represents RUs where the MIMO multiplexing is performed.

As described above, by configuring the minimum value for the number of tones allocatable to RU according to the transmission frequency bandwidth, it is possible to prevent the number of bits of indices from increasing due to an increase in the transmission frequency bandwidth.

### <Embodiment 2-5>

In Embodiment 2-1, the presence or absence of coordination may be indicated in the user field. For example, a coordination flag may be added to the user field to indicate whether coordination is active or inactive. In this case, the table illustrated in FIG. 5 may be used for the RU allocation table.

In the following, the relationship between the above-described RU allocation table and coordinated transmission will be exemplified.

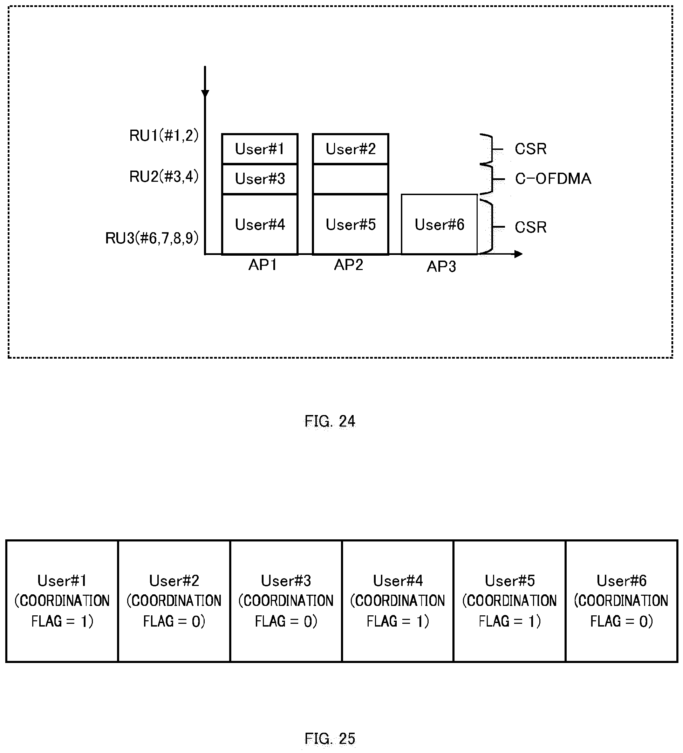

FIG. 24 illustrates exemplary resource allocation for the coordinated transmission. FIG. 24 illustrates exemplary resources allocated for communication among three APs (AP 1, AP 2, and AP 3) and the six users (User #1 to User #6). Note that the allocation in FIG. 24 is in units of RUs. For example, RU 1 corresponds to tone numbers #1 and #2, RU 2 corresponds to tone numbers #3 and #4, and RU 3 corresponds to tone numbers #6, #7, #8 and #9.

FIG. 25 illustrates exemplary coordination flags for the example in FIG. 24. FIG. 25 illustrates an example of six user fields respectively corresponding to the six users illustrated in FIG. 24 and coordination flags for these user fields.

For example, for the allocation example in FIG. 24, the indices may be configured to "00010000" in the table illustrated in FIG. 5 and the user fields may be configured by adding the coordination flags illustrated in FIG. 25.

This enables indication of the frequency band allocation information including the number of coordinated transmission destination STAs by using the conventional RU allocation table.

Note that the spatial configuration subfield configured based on the table illustrated in FIG. 6 specifies the allocation of spatial streams for each destination STA by 4 bits in accordance with the number of destination STAs (Nuser in FIG. 6). In a case of the preamble for CSR described in Embodiment 2, the destination STA possibly fails to specify the number of destination STAs for each source AP. For example, by adding the number of destination STAs for each source AP to the common field of the EHT-SIG, it is possible to specify the allocation of spatial streams for each destination STA with the table illustrated in FIG. 6.

In the embodiments described above, the coordinated communication is performed by a plurality of APs with respect to STA(s), but the present disclosure is not limited to this. For example, some of the plurality of APs may be replaced by STAs. For example, the present disclosure may be applied to a case where one or more APs and one or more STAs perform the coordinated communication with respect to another STA. Alternatively, the present disclosure may be applied to a case where two or more STAs perform the coordinated communication with respect to another STA.

The terms representing signals (packets) in the above embodiments are merely examples, and the present disclosure is not limited to these. For example, the packet may be a slot, time slot, mini slot, frame, sub frame, and the like.

In the embodiments described above, "...er (or)" used for each component may be replaced with another term such as "... circuit (circuitry)", "... device", "... unit" and "... module".

The present disclosure can be realized by software, hardware, or software in cooperation with hardware. Each functional block used in the description of each embodiment described above can be partly or entirely realized by an LSI such as an integrated circuit, and each process described in the each embodiment may be controlled partly or entirely by the same LSI or a combination of LSIs. The LSI may be individually formed as chips, or one chip may be formed so as to include a part or all of the functional blocks. The LSI may include a data input and output coupled thereto. The LSI here may be referred to as an IC, a system LSI, a super LSI, or an ultra LSI depending on a difference in the degree of integration.

The technique of implementing an integrated circuit is not limited to the LSI and may be realized by using a dedicated circuit, a general-purpose processor, or a special-purpose processor. In addition, a FPGA (Field Programmable Gate Array) that can be programmed after the manufacture of the LSI or a reconfigurable processor in which the connections and the settings of circuit cells disposed inside the LSI can be reconfigured may be used. The present disclosure can be realized as digital processing or analogue processing.

If future integrated circuit technology replaces LSIs as a result of the advancement of semiconductor technology or other derivative technology, the functional blocks could be integrated using the future integrated circuit technology. Biotechnology can also be applied.

The present disclosure can be realized by any kind of apparatus, device or system having a function of communication, which is referred to as a communication apparatus. The communication apparatus may comprise a transceiver and processing/control circuitry. The transceiver may comprise and/or function as a receiver and a transmitter. The transceiver, as the transmitter and receiver, may include an RF (radio frequency) module including amplifiers, RF modulators/demodulators and the like, and one or more antennas. Some non-limiting examples of such a communication apparatus include a phone (e.g., cellular (cell) phone, smart phone), a tablet, a personal computer (PC) (e.g., laptop, desktop, netbook), a camera (e.g., digital still/video camera), a digital player (digital audio/video player), a wearable device (e.g., wearable camera, smart watch, tracking device), a game console, a digital book reader, a telehealth/telemedicine (remote health and medicine) device, and a vehicle providing communication functionality (e.g., automotive, airplane, ship), and various combinations thereof.

The communication apparatus is not limited to be portable or movable, and may also include any kind of apparatus, device or system being non-portable or stationary, such as a smart home device (e.g., an appliance, lighting, smart meter, control panel), a vending machine, and any other "things" in a network of an "Internet of Things (IoT)".

The communication may include exchanging data through, for example, a cellular system, a wireless LAN system, a satellite system, etc., and various combinations thereof.

The communication apparatus may comprise a device such as a controller or a sensor which is coupled to a communication device performing a function of communication described in the present disclosure. For example, the communication apparatus may comprise a controller or a sensor that generates control signals or data signals which are used by a communication device performing a communication function of the communication apparatus.

The communication apparatus also may include an infrastructure facility, such as a base station, an access point, and any other apparatus, device or system that communicates with or controls apparatuses such as those in the above non-limiting examples.

A transmission apparatus according to an embodiment of the present disclosure is a first transmission apparatus, and includes: control circuitry, which, in operation, generates first control information including shared information with at least part of second control information transmitted in a second preamble by a second transmission apparatus, when the first transmission apparatus and the second transmission apparatus perform coordinated transmission; and transmission circuitry, which, in operation, transmits the first control information in a first preamble.

In an embodiment of the present disclosure, the shared information is a basic service set (BSS) color.

In an embodiment of the present disclosure, the control circuitry configures the BSS color to be different from a BSS color in non-coordinated transmission.

In an embodiment of the present disclosure, the control circuitry configures the BSS color to be a BSS color in the second control information.

In an embodiment of the present disclosure, the control circuitry configures the BSS color to be a BSS color in non-coordinated transmission, and the second control information includes a BSS color configured to be the BSS color in the non-coordinated transmission configured by the control circuitry.

In an embodiment of the present disclosure, the control circuitry configures, for the first control information, identification information of a target reception apparatus of the coordinated transmission.

In an embodiment of the present disclosure, the control circuitry configures, for the first control information, identification information different from identification information of a target reception apparatus configured for the second control information.

In an embodiment of the present disclosure, the transmission circuitry transmits, to the second transmission apparatus, information on a candidate for the identification information configurable for the first control information.

In an embodiment of the present disclosure, the control circuitry configures information identifying the first transmission apparatus to a user field of the first preamble.

In an embodiment of the present disclosure, the transmission circuitry transmits, to the second transmission apparatus, identification information of the target reception apparatus that is to be configured for the second control information.

In an embodiment of the present disclosure, the control circuitry transmits information on change in a configuration of the first control information to a target reception apparatus of the coordinated transmission before transmitting the first preamble.

In an embodiment of the present disclosure, the control circuitry configures, for the first control information, allocation information including information on a number of target reception apparatuses of coordinated spatial reuse (CSR), when performing the CSR in coordination with the second transmission apparatus.

In an embodiment of the present disclosure, the control circuitry configures the allocation information to RU allocation addressed to at least one of the target reception apparatuses.

In an embodiment of the present disclosure, the RU allocation is configured based on reference information different from reference information in non-CSR.

In an embodiment of the present disclosure, reference information for a configuration of the RU allocation is based on a number of the target reception apparatuses.

In an embodiment of the present disclosure, reference information for a configuration of the RU allocation is based on a transmission frequency band where the CSR is performed.

In an embodiment of the present disclosure, the control circuitry configures information indicating whether to perform the CSR to a user field of the first preamble.

In an embodiment of the present disclosure, the first control information is identical to the second control information.

A transmission method according to an embodiment of the present disclosure includes: generating, by a first transmission apparatus, first control information including shared information with at least part of second control information transmitted in a second preamble by a second transmission apparatus, when the first transmission apparatus and the second transmission apparatus perform coordinated transmission; and transmitting, by the first transmission apparatus, the first control information in a first preamble.

The disclosure of Japanese Patent Application No. 2020-044482, filed on March 13, 2020, including the specification, drawings and abstract, is incorporated herein by reference in its entirety.

### Industrial Applicability

An exemplary embodiment of the present disclosure is useful for mobile communication systems.

### Reference Signs List

10, 30 AP (transmission apparatus)
20 STA (reception apparatus)
101, 302 Preamble generator
102, 303 Transmission packet generator
103 Radio transmitter
201 Radio receiver
202, 305 Received packet decoder
203 Preamble extractor
301 Control data generator
304 Radio transceiver
306 Control data extractor

## Claims

1. A transmission apparatus being a first transmission apparatus, the transmission apparatus comprising:
control circuitry, which, in operation, generates first control information including shared information with at least part of second control information transmitted in a second preamble by a second transmission apparatus, when the first transmission apparatus and the second transmission apparatus perform coordinated transmission; and
transmission circuitry, which, in operation, transmits the first control information in a first preamble.

2. The transmission apparatus according to claim 1, wherein the shared information is a basic service set (BSS) color.

3. The transmission apparatus according to claim 2, wherein the control circuitry configures the BSS color to be different from a BSS color in non-coordinated transmission.

4. The transmission apparatus according to claim 2, wherein the control circuitry configures the BSS color to be a BSS color in the second control information.

5. The transmission apparatus according to claim 2, wherein,
the control circuitry configures the BSS color to be a BSS color in non-coordinated transmission, and
the second control information includes a BSS color configured to be the BSS color in the non-coordinated transmission configured by the control circuitry.

6. The transmission apparatus according to claim 1, wherein the control circuitry configures, for the first control information, identification information of a target reception apparatus of the coordinated transmission.

7. The transmission apparatus according to claim 1, wherein the control circuitry configures, for the first control information, identification information different from identification information of a target reception apparatus configured for the second control information.

8. The transmission apparatus according to claim 7, wherein the transmission circuitry transmits, to the second transmission apparatus, information on a candidate for the identification information configurable for the first control information.

9. The transmission apparatus according to claim 1, wherein the control circuitry configures information identifying the first transmission apparatus to a user field of the first preamble.

10. The transmission apparatus according to claim 7, wherein the transmission circuitry transmits, to the second transmission apparatus, identification information of the target reception apparatus that is to be configured for the second control information.

11. The transmission apparatus according to claim 1, wherein the control circuitry transmits information on change in a configuration of the first control information to a target reception apparatus of the coordinated transmission before transmitting the first preamble.

12. The transmission apparatus according to claim 1, wherein the control circuitry configures, for the first control information, allocation information including information on a number of target reception apparatuses of coordinated spatial reuse (CSR), when performing the CSR in coordination with the second transmission apparatus.

13. The transmission apparatus according to claim 12, wherein the control circuitry configures the allocation information to RU allocation addressed to at least one of the target reception apparatuses.

14. The transmission apparatus according to claim 13, wherein the RU allocation is configured based on reference information different from reference information in non-CSR.

15. A transmission method, comprising:
generating, by a first transmission apparatus, first control information including shared information with at least part of second control information transmitted in a second preamble by a second transmission apparatus, when the first transmission apparatus and the second transmission apparatus perform coordinated transmission; and
transmitting, by the first transmission apparatus, the first control information in a first preamble.
